# FASCICULE DE BREVET EUROPEEN

(11) **EP 2 372 824 B1**
(45) Date de publication et mention de la délivrance du brevet: **11.05.2016**
(21) Numéro de dépôt: 11157452.1
(22) Date de dépôt: 09.03.2011
(51) Int. Cl.: H01M 8/02, H01M 8/10

(54) **Plaque de pile à combustible, cellule et pile correspondantes**
Anschlussplatte für Brennstoffzelle, sowie entsprechende Zelle und Brennstoffzelle
Fuel cell plate and corresponding cell and fuel cell

(30) Priorité: 30.03.2010 FR 1052354
(43) Date de publication de la demande: 05.10.2011
(73) Titulaire: L'AIR LIQUIDE, Société Anonyme pour l'Etude et l'Exploitation des Procédés Georges Claude, 75007 Paris (FR)
(72) Inventeur: Novet, Thierry, 38190, BERNIN (FR); Claude, Eric, 38600, FONTAINE (FR)
(74) Mandataire: De Cuenca, Emmanuel Jaime

(56) Documents cités:
- JP-A- 2003 249 238
- US-A- 6 071 635
- US-A1- 2002 064 702
- US-A1- 2003 194 597
- US-A1- 2009 023 045
- US-B1- 6 663 994

## Description

La présente invention concerne une plaque de pile à combustible ainsi qu'une cellule et une pile comprenant une telle plaque.

L'invention concerne plus particulièrement un plaque de pile à combustible, notamment pour pile à combustible de type à membrane échangeuse de protons (« PEM »), comprenant une face réactive destinée à acheminer un gaz comburant ou un gaz carburant vers un Assemblage Membrane Electrodes, la face réactive comprenant des arêtes en saillie délimitant des canaux prévus pour la circulation de gaz, sur au moins une partie de leur hauteur les arêtes ayant une largeur décroissante en direction de leur sommet selon un plan de coupe perpendiculaire au plan de la plaque et perpendiculaire à l'axe de circulation du canal délimité par les arêtes considérées.

Les plaques de piles à combustibles sont prévues pour guider les réactifs (comburant contenant de l'oxygène et carburant contenant de l'hydrogène) jusqu'au siège des réactions électrochimiques des piles à combustibles. Plus précisément, dans les piles de type à membranes échangeuses de protons (« PEMFC ») deux plaques de pile prennent en sandwich un Assemblage Membrane-Electrodes (« AME » en français ou « MEA » en anglais). L'AME est l'élément stratégique d'une cellule de pile car c'est le siège des réactions électrochimiques de la pile.

A ce jour, le développement à grande échelle de la technologie des piles à combustibles « PEMFC » est limité par les coûts élevés au regard de la puissance électrique délivrée. Une part importante de ce coût est attribuable à l'AME.

Les deux plaques ont notamment pour fonctions d'amener les gaz réactifs à la plus grande partie possible de la surface active des AME (c'est à dire la surface où se trouvent les électrodes).

Pour ce faire, les faces réactives des plaques qui viennent au contact de l'AME comprennent à cet effet des canaux de guidage du gaz réactif (une plaque guide du comburant tandis que l'autre plaque guide du carburant). Les AME sont disposés sur les plaques de manière à ce que la surface couverte par le réseau de canaux corresponde à la surface active des AME. On peut alors définir deux types de situations possibles pour la surface active.

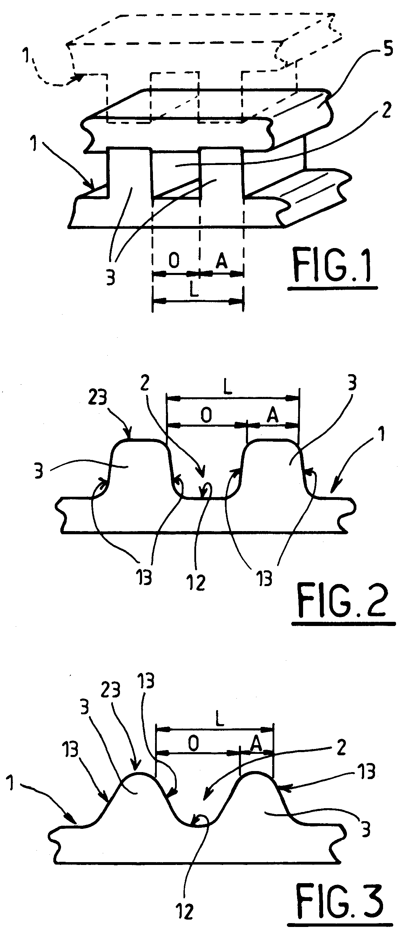

Comme visible à la figure 1, la surface active de l'AME peut être :
i) soit en face de l'ouverture 2 d'un canal,
ii) soit en face d'une arête 3 qui délimite le canal 2.

Dans le premier cas (i) ci-dessus, le gaz réactif accède facilement à l'électrode (AME), la surface de l'AME 5 correspondante est dite effectivement « active ». Dans le second cas (ii) ci-dessus, l'accès du gaz réactif à l'électrode est empêché (ou au moins limité), la surface d'AME correspondante est dite « inactive » (au moins partiellement).

Il est ainsi théoriquement possible de calculer un taux d'utilisation de la surface potentiellement active des AME (c'est-à-dire la proportion de surface potentiellement active des AME qui est effectivement active).

Actuellement, le taux d'utilisation effectif des AME est inférieur à 100 %. C'est-à-dire qu'une partie de la surface de l'électrode ainsi formée n'est pas active. Ce taux d'inutilisation est variable selon les conditions (en fonction notamment du type d'AME, de la géométrie des plaques ...). On estime généralement qu'un quart à tiers de la surface active des AME n'est pas utilisée efficacement dans les cellules de piles.

Ce taux d'utilisation dépend notamment de la géométrie du réseau de canaux des plaques.

La géométrie des canaux peut permettre d'augmenter ce taux d'utilisation cependant, cette géométrie est soumise à d'autres contraintes techniques et/ou économiques.

Une solution pour augmenter ce taux d'utilisation consiste ainsi à prévoir des canaux délimités par des arêtes de très faible largeur A au regard de la largeur O des canaux (cf. figure 1).

Cependant, pour des raisons de gestion thermique et de durée de vie des AME, la largeur O les canaux doit être limitée. Sans que ceci soit limitatif, le demandeur estime que généralement, la largeur des canaux doit être de préférence inférieure à 2mm environ.

Prévoir des arêtes de largeur très faible pose d'autres problèmes. En effet, lorsque la largeur des arêtes est très faible, la fabrication de la plaque ne sera possible que par usinage. Ce mode de fabrication augmente considérablement le coût de fabrication de la plaque.

Une autre solution envisagée pour augmenter ce taux d'utilisation consiste à utiliser de mousses métalliques ouvertes à la place de canaux. C'est-à-dire que, au lieu de prévoir des canaux sur la face réactive des plaques, les gaz réactifs se déplacent dans les pores de mousses métalliques prises en sandwich contre l'AME. Les mousses métalliques se sont ainsi en contact avec les AME que sur des zones de contact ponctuelles. Il en résulte ainsi taux d'utilisation élevé des AME. Cependant, d'autres problèmes se posent. Ainsi, les mousses métalliques ont une faible résistance à la corrosion. Leurs propriétés se dégradent donc rapidement et les produits de corrosion polluent les AME. De plus, la gestion de la répartition homogène des réactifs sur la surface des AME et de l'évacuation des résidus et produits de réaction sont plus difficiles à réaliser. Enfin, les propriétés mécaniques des ensembles ainsi obtenus ne sont pas satisfaisantes.

On constate donc que les voies d'augmentation du taux d'utilisation de la surface utile des AME sont souvent incompatibles avec le mode de fonctionnement ou de fabrication des piles.

Un but de la présente invention est de pallier tout ou partie des inconvénients de l'art antérieur relevés ci-dessus.

A cette fin, la cellule de pile à combustible selon l'invention comprend deux plaques, par ailleurs conformes à la définition générique qu'en donne le préambule ci-dessus, qui sont essentiellement caractérisées en ce que le sommet des arêtes est courbe et convexe.

L'architecture selon la revendication 1 permet de diminuer les pertes de charge dans la circulation des gaz dans les canaux par rapport aux systèmes connus (notamment US 2002/0064702A1). L'architecture revendiquée et notamment les dimensions relatives permet cette amélioration tout en facilitant le processus de fabrication des plaques. Cette diminution de la perte de charge permet une réduction de la consommation électrique des compresseurs utilisés pour faire circuler le gaz (l'air).

Cette architecture permet une évacuation plus facile de l'eau produite. En effet, du côté anodique et du côté cathodique il est nécessaire de procéder à des purges pour évacuer l'eau liquide dans les canaux. L'architecture permet d'augmenter la vitesse du gaz admis dans les canaux et une purge plus efficace du fait des pertes de charge relativement plus faible.

Par ailleurs, la cellule de pile à combustible selon l'invention comporte les caractéristiques suivantes :
- les flancs des arêtes sont inclinés par rapport à la direction perpendiculaire au plan de la plaque selon un angle compris entre 5 et 50 degrés et de préférence entre 10 et 30 degrés (mesuré par exemple à mi-hauteur des arêtes),
- les extrémités supérieures des arêtes sont courbes au niveau de la jonction entre les flancs et le sommet des arêtes,
- les extrémités inférieures des arêtes sont courbes à la jonction entre les flancs des arêtes et la surface de la plaque délimitant le fond des canaux,
- les arêtes ont une section délimitée par une courbe de forme générale sinusoïdale selon un plan de coupe perpendiculaire au plan de la plaque et perpendiculaire à l'axe de circulation du canal délimité par les arêtes considérées,
- en coupe selon un plan perpendiculaire au plan de la plaque et perpendiculaire à l'axe de circulation du canal délimité par les arêtes considérées, le fond du canal et les arêtes se raccordent de façon continûment courbe selon un profil de forme générale sinusoïdale,
- en coupe selon un plan perpendiculaire au plan de la plaque et perpendiculaire à l'axe de circulation du canal délimité par les arêtes considérées, la largeur des canaux à mi-hauteur des arêtes est comprise entre 1 et 1,5mm,
- selon un plan perpendiculaire au plan de la plaque et perpendiculaire à l'axe de circulation du canal délimité par les arêtes considérées, les arêtes ont, à mi-hauteur, une largeur entre 0,5 et 1 mm.
Par ailleurs, la cellule de pile à combustible selon l'invention comporte l'une ou plusieurs des caractéristiques techniques suivantes
- le fond des canaux est courbe et concave
- le fond des canaux possède une portion plane,
   - la plaque est constituée au moins en partie en matériau métallique ou en alliage métallique embouti et/ou moulé et/ou usiné mécaniquement ou chimiquement,
   - la plaque est constituée au moins en partie en matériau composite moulé et/ou usiné, par exemple un composite carbone/polymère, ou tout autre moyen approprié.

L'invention concerne également une pile à combustible comprenant une ou des cellules conformes à l'une quelconque des caractéristiques ci-dessous ou ci-dessus.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective, schématique et partielle, d'un détail d'une coupe d'un Assemblage Membrane Electrodes pris en sandwich entre deux plaques de pile selon une première configuration classique,
- la figure 2 représente en coupe, schématique et partielle, d'un détail d'une plaque de pile selon une seconde configuration classique,
- la figure 3 représente en coupe, schématique et partielle, d'un détail d'une plaque de pile selon un exemple de réalisation de l'invention.

La figure 1 illustre un exemple de canaux 2 délimités par des arêtes 3 de section rectangulaire (profil en créneaux). Ce profil peut être obtenu par usinage d'une plaque.

L'hypothèse peut être faite que la proportion de la surface de l'Assemblage Membrane Electrodes 5 (AME) effectivement active %Sact est assimilable à la fraction de la surface de la plaque en regard des canaux 2 (%Sact=longueur ouverte O par unité de longueur L).

Pour vérifier cette hypothèse, le demandeur a mené une expérience consistant à faire varier ce rapport O/L, toutes les autres conditions étant égales par ailleurs.

Trois valeurs de proportion active %Sact sont testées. Les densités de courant obtenues à une tension de cellule de 0,6 V (valeur typique de fonctionnement nominal) ont été comparées.

Les résultats montrent que la densité de courant est globalement proportionnelle à cette proportion active %Sact.

Du fait des propriétés des matériaux et des contraintes de fonctionnement des piles, la valeur de proportion active %Sact est généralement comprise entre 67 % et 75 % pour des plaques usinées.

Le demandeur a constaté que cette proportion active pouvait être améliorée sans pénaliser les conditions de fonctionnement ou de fabrication de la plaque.

Pour cela, le demandeur a mis en évidence qu'en courbant au moins en partie la portion supérieure des arêtes, une amélioration pouvait être constatée.

Le demandeur a fait l'hypothèse que, lors du serrage des plaques contre l'AME 5, le sommet des arêtes pénètre dans la couche de diffusion de l'AME sur une distance de 50 à 80 micromètres environ. Pour les besoins de la démonstration, la valeur moyenne de 60 micromètres est retenue.

En conférant aux arêtes 3 une section de forme de type sinusoïdale telle que représentée à la figure 2, le demandeur a calculé que la proportion active %Sact de l'exemple de la figure 3 est de l'ordre de %Sact = 78,5 %.

Ce profil sinusoïdal comporte de préférence :
- un fond 12 de canal concave et se raccordant de façon continue avec le profil des arêtes 3,
- des flancs 13 d'arêtes inclinés formant un rétrécissement de la largeur des arêtes en direction du sommet 23 (par exemple, à mi-hauteur le flanc de l'arête a inclinaison par rapport à la perpendiculaire au plan de la plaque comprise entre 5 et 50 degrés et de préférence entre 10 et 30 degrés),
- un sommet 23 d'arête convexe.

Cette géométrie a été usinée sur des plaques en matériau composite.

Une vérification expérimentale a comparé ce profil à un profil classique moulé. La géométrie selon la figure 3 a permis d'obtenir une proportion active %Sact de 78,5 % contre 64% pour un profil classique d'une plaque en matériau composite moulé.

La densité de courant (en A/cm²) à une tension de 0,6V obtenue pour la réalisation de la figure 3 est de 0,726 A/cm², contre 0,631 A/cm² pour le profil classique à section rectangulaire. Le gain en densité de courant est ainsi de l'ordre de 15%.

Ceci démontre l'efficacité de l'invention même si le rapport densité de courant/proportion active %Sact ne confirme pas complètement les hypothèses du départ. En effet, ce rapport (densité de courant/%Sact) constaté est d'environ 0,98 pour la géométrie classique de la figure 2 contre environ 0,93 pour la géométrie selon l'invention (figure 3).

Les performances selon l'invention sont améliorées également par rapport à la géométrie de la figure 2 obtenue par moulage dans la quelle les arêtes 3 ont, en section transversale, une forme générale trapézoïdale avec un sommet 23 plan. La plaque classique selon la figure 2 peut être obtenue en matériau composite carbone/polymère moulée.

Lors du serrage des plaques contre l'AME 5, le sommet des arêtes du profil de la figure 2 pénètre dans la couche de diffusion de l'AME sur une distance de 50 à 80 micromètres environ. Il en résulte que la proportion de la surface de l'AME effectivement active %Sact est assimilable à une partie de l'arête 3 additionnée de la partie des zones courbes qui pénètrent dans la couche de diffusion de l'AME 5.

Cette configuration permet d'obtenir une proportion active %Sact de l'ordre de 70%, inférieure en performance selon l'invention.

La géométrie originale selon l'invention permet ainsi une augmentation importante du taux d'utilisation de l'AME sans pénaliser le fonctionnement ou le coût de fabrication de la plaque. En effet, cette géométrie est compatible avec les méthodes de fabrication des plaques dites d'emboutissage et de moulage. C'est à dire les méthodes considérées comme les plus prometteuses.

L'invention permet ainsi d'augmenter le taux d'utilisation de la surface active des AME. Ceci permet de générer une augmentation de la puissance électrique délivrée par chaque AME et donc de réduire le coût d'une pile à combustible par kW produit.

Bien entendu, l'invention ne se limite pas au profil sinusoïdal décrit ci-dessus. En particulier, en coupe selon un plan perpendiculaire au plan de la plaque et perpendiculaire à l'axe de circulation du canal 2 délimité par les arêtes 3 considérées, le fond du canal 2 et les arêtes 3 peuvent se raccorder de façon continûment courbe selon un profil qui s'approche d'une sinusoïde, par exemple une sinusoïde asymétrique (c'est-à-dire dans laquelle l'arête 3 et l'ouverture 2 n'ont pas la même largeur et/ou pas le même rayon de courbure).

## Revendications

1. Cellule de pile à combustible comprenant deux plaques prenant en sandwich un Assemblage Membrane Electrodes (5), **caractérisé en ce que** les plaques comprennent chacune une face (1) réactive destinée à acheminer un gaz comburant ou un gaz carburant vers un Assemblage Membrane Electrodes (5), la face (1) réactive comprenant des arêtes (3) en saillie délimitant des canaux (2) prévus pour la circulation de gaz, sur au moins une partie de leur hauteur les arêtes (3) ayant une largeur décroissante en direction de leur sommet selon un plan de coupe perpendiculaire au plan de la plaque et perpendiculaire à l'axe de circulation du canal (2) délimité par les arêtes (3) considérées, le sommet (23) des arêtes (3) étant courbe et convexe, les arêtes (3) ayant une section délimitée par une courbe de forme générale sinusoïdale selon un plan de coupe perpendiculaire au plan de la plaque et perpendiculaire à l'axe de circulation du canal (2) délimité par les arêtes (3) considérées, les extrémités supérieures des arêtes (3) étant courbes au niveau de la jonction entre les flancs (13) et le sommet (23) des arêtes (3), les extrémités inférieures des arêtes (3) étant courbes à la jonction entre les flancs (13) des arêtes et la surface de la plaque délimitant le fond (12) des canaux (2), **caractérisé en ce qu'**en coupe selon un plan perpendiculaire au plan de la plaque et perpendiculaire à l'axe de circulation du canal (2) délimité par les arêtes (3) considérées, la largeur des canaux (2) à mi-hauteur des arêtes (3) est comprise entre 1 et 1,5mm, et **en ce que** selon un plan perpendiculaire au plan de la plaque et perpendiculaire à l'axe de circulation du canal (2) délimité par les arêtes (3) considérées, les arêtes (3) ont, à mi-hauteur, une largeur comprise entre 0,5 et 1 mm et **en ce que** les flancs (13) des arêtes (3) sont inclinés par rapport à la direction perpendiculaire au plan de la plaque selon un angle compris entre 5 et 50 degrés et de préférence entre 10 et 30 degrés, et **en ce que**, en coupe selon un plan perpendiculaire au plan de la plaque et perpendiculaire à l'axe de circulation du canal (2) délimité par les arêtes (3) considérées, le fond du canal (2) et les arêtes (3) se raccordent de façon continûment courbe selon un profil de forme générale sinusoïdale.

2. Cellule selon la revendication 1, **caractérisée en ce que** le fond (2) des canaux (2) est courbe et concave.

3. Cellule selon la revendication 1 ou 2, **caractérisée en ce que** le fond des canaux (2) possède une portion plane.

4. Cellule selon l'une quelconque des revendications 1 à 3, **caractérisé en ce que** chaque plaque est constituée au moins en partie de matériau métallique ou d'alliage métallique embouté et/ou moulé et/ou usiné mécaniquement ou chimiquement.

5. Cellule selon l'une quelconque des revendications 1 à 3, **caractérisé en ce que** chaque plaque est constituée au moins en partie de matériau composite moulé et/ou usiné tel qu'un composite carbone/polymère.

6. Pile à combustible comprenant une ou des cellules conformes à l'une quelconque des revendications 1 à 5.

## Patentansprüche

1. Brennstoffzelle, zwei Platten umfassend, die einen Membranelektrodenaufbau (5) zwischen sich anordnen, **dadurch gekennzeichnet, dass** die Platten jeweils eine reaktive Seite (1) umfassen, die dazu bestimmt ist, ein Sauerstoffträgergas oder ein Treibstoffgas zu einem Membranelektrodenaufbau (5) zu befördern, wobei die reaktive Seite (1) hervorstehende Kanten (3) umfasst, die Kanäle (2) eingrenzt, die für die Gaszirkulation vorgesehen sind, wobei die Kanten (3) auf zumindest einem Teil ihrer Höhe in Richtung ihres Scheitelpunkts entlang einer Schnittebene senkrecht zur Plattenebene und senkrecht zur Zirkulationsachse des Kanals (2), der von den angenommenen Kanten (3) eingegrenzt wird, eine abnehmende Breite aufweisen, wobei der Scheitelpunkt (23) der Kanten (3) gekrümmt und konvex ist, und die Kanten (3) einen Querschnitt aufweisen, der durch eine Kurve eingegrenzt wird, die im Allgemeinen eine Sinusform entlang einer Schnittebene senkrecht zur Plattenebene und senkrecht zur Zirkulationsachse des Kanals (2) aufweist, die von den angenommenen Kanten (3) eingegrenzt wird, wobei die oberen Enden der Kanten (3) im Bereich der Verbindung zwischen den Flanken (13) und dem Scheitelpunkt (23) der Kanten (3) gekrümmt sind, wobei die unteren Enden der Kanten (3) an der Verbindung zwischen den Flanken (13) der Kanten und der Oberfläche der Platte, die den Boden (12) der Kanäle (2) begrenzt, gekrümmt sind, **dadurch gekennzeichnet, dass** die Breite der Kanäle (2) auf halber Höhe der Kanten (3) im Schnitt entlang einer Ebene senkrecht zur Plattenebene und senkrecht zur Zirkulationsachse des Kanals (2), die von den angenommenen Kanten (3) eingegrenzt wird, zwischen 1 und 1,5 mm liegt, und dadurch, dass die Kanten (3) entlang einer Ebene senkrecht zur Plattenebene und senkrecht zur Zirkulationsachse des Kanals (2), die von den angenommenen Kanten (3) eingegrenzt wird, auf halber Höhe eine Breite zwischen 0,5 und 1 mm aufweisen, und dadurch, dass die Flanken (13) der Kanten (3) im Verhältnis zur Richtung senkrecht zur Plattenebene in einem Winkel zwischen 5 und 50 Grad, und vorzugsweise zwischen 10 und 30 Grad geneigt sind, und dadurch, dass der Boden des Kanals (2) und die Kanten (3) im Querschnitt entlang einer Ebene senkrecht zur Plattenebene und senkrecht zur Zirkulationsachse des Kanals (2), die von den angenommenen Kanten (3) eingegrenzt wird, einander in durchgehend gekrümmter Form entsprechend einem Profil anschließen, das im Allgemeinen eine Sinusform aufweist.

2. Zelle nach Anspruch 1, **dadurch gekennzeichnet, dass** der Boden (2) der Kanäle (2) gekrümmt und konkav ist.

3. Zelle nach Anspruch 1 oder 2, **dadurch gekennzeichnet, dass** der Boden der Kanäle (2) einen ebenen Abschnitt aufweist.

4. Zelle nach irgendeinem der Ansprüche 1 bis 3, **dadurch gekennzeichnet, dass** jede Platte zumindest teilweise aus einem tiefgezogenen und/oder geformten und/oder mechanisch oder chemisch bearbeiteten metallischen Werkstoff oder Metalllegierung gebildet wird.

5. Zelle nach irgendeinem der Ansprüche 1 bis 3, **dadurch gekennzeichnet, dass** jede Platte zumindest teilweise aus einem geformten und/oder bearbeiteten Verbundwerkstoff, wie einem Kohlenstoff-/Polymer-Verbundstoff gebildet wird.

6. Brennstoffzelle, zumindest eine oder mehrere Zellen nach irgendeinem der Ansprüche 1 bis 5 umfassend.

## Claims

1. Fuel cell comprising two plates sandwiching an electrode membrane assembly (5), **characterised in that** the plates each comprise a reactive face (1) intended to convey an oxidising gas or a fuel gas to an electrode membrane assembly (5), the reactive face (1) comprising projecting ridges (3) delimiting channels (2) provided for the circulation of gas, over at least part of their height the ridges (3) having a width decreasing in the direction of their apex on a cutting plane perpendicular to the plane of the plate and perpendicular to the circulation axis of the channel (2) delimited by the ridges (3) in question, the top (23) of the ridges (3) being curved and convex, the ridges (3) having a section delimited by a curve with a roughly sinusoidal shape on a cutting plane perpendicular to the plane of the plate and perpendicular to the circulation axis of the channel (2) delimited by the ridges (3) in question, the top ends of the ridges (3) being curved at the junction between the flanks (13) and the top (23) of the ridges (3), the bottom ends of the ridges (3) being curved at the junction between the flanks (13) of the ridges and the surface of the plate delimiting the bottom (12) of the channels (2), **characterised in that**, in cross section along a plane perpendicular to the plane of the plate and perpendicular to the circulation axis of the channel (2) delimited by the ridges (3) in question, the width of the channels (2) halfway up the ridges (3) is between 1 and 1.5 mm, and **in that**, on a plane perpendicular to the plane of the plate and perpendicular to the circulation axis of the channel (2) delimited by the ridges (3) in question, the ridges (3) have, halfway up, a width of between 0.5 and 1 mm, and **in that** the flanks (13) of the ridges (3) are inclined with respect to the direction perpendicular to the plane of the plate at an angle of between 5 and 50 degrees and preferably between 10 and 30 degrees, and **in that**, in cross section on a plane perpendicular to the plane of the plate and perpendicular to the circulation axis of the channel (2) delimited by the ridges (3) in question, the bottom of the channel (2) and the ridges (3) are connected in a continuously curved fashion on a profile with a roughly sinusoidal shape.

2. Cell according to claim 1, **characterised in that** the bottom (2) of the channels (2) is curved and concave.

3. Cell according to claim 1 or 2, **characterised in that** the bottom of the channels (2) has a flat portion.

4. Cell according to any one of claims 1 to 3, **characterised in that** each plate is formed at least partly from metal or metal alloy material pressed and/or moulded and/or worked mechanically or chemically.

5. Cell according to any one of claims 1 to 3, **characterised in that** each plate is at least partly formed from moulded and/or worked composite material such as a carbon/polymer composite.

6. Fuel cell comprising one or more cells according to any one of claims 1 to 5.
